# EUROPÄISCHE PATENTANMELDUNG

(11) **EP 1 357 581 A2**
(43) Veröffentlichungstag der Anmeldung: **29.10.2003**
(21) Anmeldenummer: 03008931.2
(22) Anmeldetag: 16.04.2003
(51) Int. Cl.: H01J 61/44, C09K 11/80, C09K 11/78

(54) **UV-Fluoreszenzröhre zur Hautbräunung mittels UV-Strahlung**

(30) Priorität: 23.04.2002 DE 10218114
(71) Anmelder: JK-Holding GmbH, 53578 Windhagen (DE)
(72) Erfinder: Richarz, Frank, Dr., 53123 Bonn (DE)
(74) Vertreter: Koepe, Gerd L., Dipl.-Chem.

(57) **Zusammenfassung**

Die Erfindung betrifft eine UV-Fluoreszenzröhre zur Hautbräunung mittels UV-Strahlung mit einem Entladüngsgefäß für eine elektrische Gasentladung, mit einem in dem Entladungsgefäß aufgenommenen Entladungsmedium, in dem mittels elektrischer Gasentladung eine Primärstrahlung generierbar ist, und mit einem Umwandlungsmittel zur Umsetzung der Primärstrahlung in emittierbare, für die Bräunung nutzbare UV-Strahlung. Die UV-Fluoreszenzröhre ist erfindungsgemäß dadurch gekennzeichnet, dass das Umwandlungsmittel so ausgewählt ist, dass eine maximale spektrale Intensität der emittierbaren UV-Strahlung bei einer Wellenlänge gegeben ist, die größer ist als eine Wellenlänge, bei der eine maximale Pigmentdunklung der Haut auftritt, und dass die spektrale Intensität der emittierbaren Strahlung bei der Wellenlänge, bei der maximale Pigmentdunklung auftritt, kleiner ist als 50 % der maximalen spektralen Intensität.

## Beschreibung

Die Erfindung betrifft eine UV-Fluoreszenzröhre zur Hautbräunung mittels UV-Strahlung nach dem Oberbegriff des Anspruchs 1.

Solche UV-Fluoreszenzröhren bzw. -leuchten sind bekannt und weisen ein Entladungsgefäß für eine elektrische Gasentladung, ein in dem Entladungsgefäß aufgenommenes Entladungsmedium, in dem mittels elektrischer Gasentladung eine Primärstrahlung generierbar ist, und ein Umwandlungsmittel zur Umsetzung der Primärstrahlung in emittierbare, für die Bräunung nutzbare UV-Strahlung auf.

In Niederdruck-Fluoreszenzröhren wird in der Regel die aus einem Quecksilberspektrum entstehende Primärstrahlung in sogenannten Phosphoren in sichtbares Licht und für die Bräunung nutzbare UV-Strahlung umgesetzt. Als Phosphore werden verschiedene Silikate, Borate, Aluminate mit unterschiedlichen Dotierungen mit Blei, Europium und Cer eingesetzt.

In Abhängigkeit der verwendeten Phosphore entstehen dabei unterschiedliche Emissionsspektren mit charakteristischen Maxima und Halbwertsbreiten. Der hauptsächlich verwendete Phosphortyp ist eine BaSiO5:Pb2+ Verbindung mit einem Emissionsmaximum bei ungefähr 350 nm und einer Halbwertsbreite von 40 bis 50 nm. Dieser Phosphor emittiert somit hauptsächlich im UVA-Bereich und trägt damit maßgeblich zur Pigmentdunklung der Haut bei. Er hat jedoch über seine große Halbwertsbreite auch starke kurzwellige Anteile, die sich in der Erythemalbewertung negativ bemerkbar machen, da hierdurch die Sonnenbrandgefahr erhöht wird.

Zur Generierung von für die Pigmentbildung geeignetem UV-Licht werden vor allem Aluminate mit Cer3+ Dotierung verwendet. Das Emissionsmaximum dieser Substanz liegt bei etwa 300 bis 303 nm mit einer Halbwertsbreite von etwa 20 bis 30 nm. Außerdem ist für die Pigmentbildung LaPO4:Ce3+ gebräuchlich mit einem Emissionsmaximum bei 314 nm und einer Halbwertsbreite von 18 nm.

Die Hautbräunung erfolgt im Wesentlichen über Pigmentbildung und Pigmentdunklung. Die entsprechenden Wirkungsfunktionen sind in DIN 5031 beschrieben.

Die Wirkungsfunktion für die Pigmentbildung weist bei etwa 300 nm ein Maximum auf und ist in ihrem Verlauf sehr ähnlich zur Wirkungsfunktion des Erythems. Die Wirkungsfunktion für die Pigmentdunklung weist bei etwa 340 nm ein Maximum sowie eine Verteilung zwischen 300 und 400 nm auf.

Wegen des sehr ähnlichen Verlaufs der Wirkungsfunktionen für Pigmentbildung und erythemaler Wirkung können diese Effekte praktisch nicht getrennt werden.

Handelsübliche UV-Fluoreszenzröhren weisen als Hauptkomponente das bleidotierte Bariumsilikat auf, wodurch zwar gute Intensitäten und Pigmentdunklungseigenschaften erzielt werden. Wegen der vergleichsweise starken kurzwelligen Anteile des Emissionsspektrums besteht jedoch eine nicht unerhebliche Erythem-, d.h. Sonnenbrandgefahr.

**Aufgabe** der Erfindung ist es, eine UV-Fluoreszenzröhre der oben angegebenen Art zu schaffen, bei der bei guten Pigmentdunklungseigenschaften die Sonnenbrandgefahr deutlich reduziert ist.

Diese Aufgabe wird durch die UV-Fluoreszenzröhre mit den Merkmalen des Patentanspruches 1 gelöst.

Vorteilhafte Ausgestaltungen der erfindungsgemäßen UV-Fluoreszenzröhre sind Gegenstand der Unteransprüche.

Eine UV-Fluoreszenzröhre der oben angegebenen Art ist erfindungsgemäß dadurch weitergebildet, dass das Umwandlungsmittel so ausgewählt ist, dass eine maximale spektrale Intensität der emittierbaren UV-Strahlung bei einer Wellenlänge gegeben ist, die größer ist als eine Wellenlänge, bei der eine maximale Pigmentdunklung der Haut auftritt, und dass die spektrale Intensität der emittierbaren Strahlung bei der Wellenlänge, bei der maximale Pigmentdunklung auftritt, kleiner ist als 50 % der maximalen spektralen Intensität.

Der Erfindung liegt die Erkenntnis zugrunde, dass ein Umwandlungsmittel, welches hauptsächlich zur Pigmentdunklung beitragen soll, nicht notwendigerweise eine hohe Erythemalbewertung bekommen muss.

Als ein Kerngedanke der erfindungsgemäßen Lösung kann angesehen werden, dass das Umsetzungsmittel so ausgewählt wird, dass einerseits die UV-Emission im Wesentlichen bei Wellenlängen erfolgt, die größer sind als eine Wellenlänge, bei der eine maximale Pigmentdunklung der Haut auftritt und dass diese UV-Emission andererseits hinreichend schmalbandig erfolgt, so dass bei der Wellenlänge, bei der maximale Pigmentdunklung auftritt, die spektrale Intensität bereits auf weniger als 50 % der maximalen spektralen Intensität abgefallen ist.

Als wesentlicher Vorteil der erfindungsgemäßen UV-Fluoreszenzröhre kann angesehen werden, dass sehr gute Pigmentdunklungseigenschaften erzielt werden, ohne dass damit eine Erhöhung der Sonnenbrandgefahr verbunden ist.

Bei einer vorteilhaften Ausgestaltung der erfindungsgemäßen UV-Fluoreszenzröhre ist die spektrale Intensität der emittierbaren UV-Strahlung bei der Wellenlänge, bei der maximale Pigmentdunklung auftritt, kleiner als 10 %, bevorzugt kleiner als 5 % der maximalen spektralen Intensität. Die Sonnenbrandgefahr kann dann noch weiter reduziert werden.

Das Umwandlungsmittel kann insbesondere als ein 2-Phosphor-System mit einem ersten Phosphormittel und einem zweiten Phosphormittel ausgebildet sein, wobei bevorzugt das zweite Phosphormittel im Wesentlichen ausschließlich zur Pigmentdunklung beiträgt.

Besonders gute Ergebnisse hinsichtlich Pigmentdunklung und Pigmentbildung ohne Sonnenbrandgefahr werden erzielt, wenn das erste Phosphormittel ein Emissionsmaximum bei etwa 300 nm und eine Halbwertsbreite von etwa 30 nm aufweist und wenn das zweite Phosphormittel ein Emissionsmaximum bei etwa 370 nm und eine Halbwertsbreite von etwa 20 nm aufweist. Das erste Phosphormittel bewirkt die Pigmentbildung und das zweite Phosphormittel trägt im Wesentlichen allein zur Pigmentdunklung bei und leistet keinen erythemalen Beitrag. Auf diese Weise kann bis zu 20 % mehr Pigmentdunklung erzielt werden, ohne dass der Erythemwert erhöht wird.

Als zweites Phosphormittel kann beispielsweise SrB407:Eu2+ mit einem Emissionsmaximum bei etwa 368 bis 370 nm und einer Halbwertsbreite von unter 20 nm verwendet werden.

Um eine hinreichende Pigmentbildung zu erzielen, ist das Umsetzungsmittel zweckmäßig so ausgewählt, dass bei einer Wellenlänge, bei der maximale Pigmentbildung auftritt, ein zweites Maximum der spektralen Intensität der emittierbaren UV-Strahlung gegeben ist.

Hierzu können bevorzugt Cer-dotierte Aluminiumverbindungen als erstes Phosphormittel verwendet werden. Beispielsweise kann SrAl12019:Ce3+ mit einem Emissionsmaximum bei etwa 302 nm und einer Halbwertsbreite von etwa 27 nm als erstes Phosphormittel eingesetzt werden.

Weitere Eigenschaften der erfindungsgemäßen UV-Fluoreszenzröhre werden nachstehend unter Bezugnahme auf die beigefügten Figuren beschrieben.

Dort zeigt:
- Fig. 1: ein Emissionsspektrum einer erfindungsgemäßen UV-Fluoreszenzröhre im Vergleich zum Emissionsspektrum einer herkömmlichen UV-Fluoreszenzröhre und
- Fig. 2: eine Tabelle mit relevanten Emissionsdaten von Phosphormitteln.

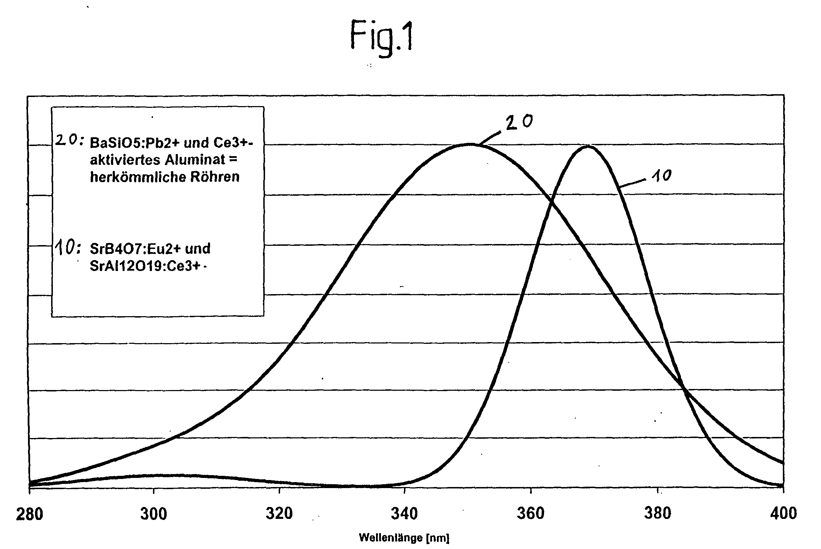

Fig. 1 zeigt ein Emissionsspektrum 10 einer erfindungsgemäßen UV-Fluoreszenzröhre und ein Emissionsspektrum 20 einer herkömmlichen UV-Fluoreszenzröhre. Die Emissionsspektren 10 und 20 sind so skaliert, dass die Maximalwerte übereinstimmen. In Wirklichkeit weisen die Emissionsspektren 10 und 20 bei 300 nm etwa dieselbe Intensität auf.

Das Emissionsspektrum 10 stammt von einer Röhre mit einem 2-Phosphor-System mit SrB407:Eu2+ und SrAl12019:Ce3+ als Umwandlungsmittel.

Das Emissionsspektrum 10 weist ein Hauptmaximum bei etwa 370 nm auf, welches somit gegenüber der Wellenlänge 340 nm, bei der eine maximale Pigmentdunklung der Haut auftritt, um etwa 30 nm zu größeren Wellenlängen hin verschoben ist. Bei der Wellenlänge 340 nm, bei der maximale Pigmentdunklung der Haut auftritt, ist die spektrale Intensität der Kurve 10 bereits auf weniger als 3 % der maximalen spektralen Intensität abgefallen. Das Emissionsspektrum 10 weist bei etwa 300 nm ein zweites Emissionsmaximum auf, welches auf die Emission von SrAl12019:Ce3+ zurückgeht. Die spektrale Intensität beträgt bei diesem Maximum jedoch nur etwa 4 % der maximalen spektralen Intensität bei 370 nm.

Im fundamentalen Unterschied zum Emissionsspektrum 10 der erfindungsgemäßen UV-Fluoreszenzröhre findet sich bei dem Emissionsspektrum 20 der herkömmlichen Röhre im Wesentlichen ein Emissionsmaximum bei etwa 350 nm, das im Vergleich zum Emissionsmaximum des Spektrums 10 jedoch eine deutlich größere Halbwertsbreite von etwa 50 nm aufweist. Ein weiteres Maximum, das aber so schwach ausgeprägt ist, dass es bei der vorliegend gewählten Skalierung nicht erkennbar ist, findet sich bei etwa 300 nm.

Bei der Wellenlänge 300 nm, bei der maximale Pigmentbildung beobachtet wird, stimmen die tatsächlichen spektralen Intensitäten der Emissionsspektren 10 und 20 zwar etwa überein. Gleichwohl wird die Sonnenbrandgefahr wegen der im Bereich um 320 nm deutlich erniedrigten spektralen Intensität bei der erfindungsgemaßen UV-Fluoreszenzröhre im Vergleich zur herkömmlichen Fluoreszenzröhre deutlich reduziert.

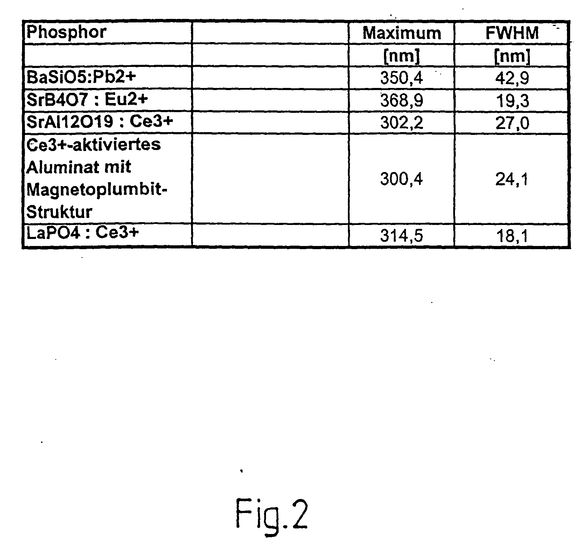

In Fig. 2 sind in einer Tabelle die für die UV-Emission relevanten Daten von verschiedenen Phosphoren zusammengestellt, wobei mit FWHM (Full Width Half Maximum) die Halbwertsbreite bezeichnet ist.

## Patentansprüche

1. UV-Fluoreszenzröhre zur Hautbräunung mittels UV-Strahlung, mit einem Entladungsgefäß für eine elektrische Gasentladung,
mit einem in dem Entladungsgefäß aufgenommenen Entladungsmedium, in dem mittels elektrischer Gasentladung eine Primärstrahlung generierbar ist,
und mit einem Umwandlungsmittel zur Umsetzung der Primärstrahlung in emittierbare, für die Bräunung nutzbare UV-Strahlung,
**dadurch gekennzeichnet,**
**dass** das Umwandlungsmittel so ausgewählt ist, dass eine maximale spektrale Intensität der emittierbaren UV-Strahlung bei einer Wellenlänge gegeben ist, die größer ist als eine Wellenlänge, bei der eine maximale Pigmentdunklung der Haut auftritt, und
**dass** die spektrale Intensität der emittierbaren Strahlung bei der Wellenlänge, bei der maximale Pigmentdunklung der Haut auftritt, kleiner ist als 50% der maximalen spektralen Intensität.

2. UV-Fluoreszenzröhre nach Patentanspruch 1,
**dadurch gekennzeichnet,**
**dass** die spektrale Intensität der emittierbaren UV-Strahlung bei der Wellenlänge, bei der maximale Pigmentdunklung auftritt, kleiner ist als 10 %, bevorzugt kleiner ist als 5%, der maximalen spektralen Intensität.

3. UV-Fluoreszenzröhre nach einem der Patentansprüche 1 oder 2,
**dadurch gekennzeichnet,**
**dass** das Umwandlungsmittel als ein 2-Phosphor-System mit einem ersten Phosphormittel und einem zweiten Phosphormittel ausgebildet ist.

4. UV-Fluoreszenzröhre nach Patentanspruch 3,
**dadurch gekennzeichnet,**
**dass** das zweite Phosphormittel im Wesentlichen ausschließlich zur Pigmentdunklung beiträgt.

5. UV-Fluoreszenzröhre nach einem der Ansprüche 3 oder 4,
**dadurch gekennzeichnet,**
**dass** das erste Phosphormittel ein Emissionsmaximum bei etwa 300 nm und eine Halbwertsbreite von etwa 30 nm aufweist und
**dass** das zweite Phosphormittel ein Emissionsmaximum bei etwa 370 nm und eine Halbwertsbreite von etwa 20 nm aufweist.

6. UV-Fluoreszenzröhre nach einem der Ansprüche 3 bis 5,
**dadurch gekennzeichnet,**
**dass** das erste Phosphormittel eine Cer-dotierte Aluminiumverbindung, insbesondere SrAl12019:Ce3+, ist.

7. UV-Fluoreszenzröhre nach einem der Ansprüche 3 bis 6,
**dadurch gekennzeichnet,**
**dass** das zweite Phosphormittel SrB407:Eu2+ ist.

8. UV-Fluoreszenzröhre nach einem der Patentansprüche 1 bis 7,
**dadurch gekennzeichnet,**
**dass** das Umsetzungsmittel so ausgewählt ist, dass bei einer Wellenlänge, bei der maximale Pigmentbildung auftritt, ein zweites Maximum der spektralen Intensität der emittierbaren UV-Strahlung gegeben ist.
